# EUROPÄISCHE PATENTSCHRIFT

(11) **EP 2 014 176 B1**
(45) Veröffentlichungstag und Bekanntmachung des Hinweises auf die Patenterteilung: **15.09.2010**
(21) Anmeldenummer: 07013707.0
(22) Anmeldetag: 12.07.2007
(51) Int. Cl.: A23L 1/01, A23L 1/217, A47J 36/38, A47J 37/12

(54) **Verfahren zur Herstellung von fettreduzierten frittierten Nahrungsmitteln**
Method for manufacturing fat-reduced fried foodstuffs
Procédé destiné à la fabrication de produits alimentaires friables peu gras

(43) Veröffentlichungstag der Anmeldung: 14.01.2009
(73) Patentinhaber: Intersnack Knabber-Gebäck GmbH & Co. KG, 50858 Köln (DE)
(72) Erfinder: Lenssen, Kathrin, 50858 Köln (DE); Haferkamp, Reiner, 50858 Köln (DE); Alles, Eckhard, 50996 Köln (DE)
(74) Vertreter: Becker Kurig Straus

(56) Entgegenhaltungen:
- WO-A-01/91580
- CA-A- 957 896
- DATABASE WPI Week 200575 Derwent Publications Ltd., London, GB; AN 2005-726197 XP002470011 & CN 1 568 756 A (LOU E) 26. Januar 2005 (2005-01-26)
- DATABASE WPI Week 200538 Derwent Publications Ltd., London, GB; AN 2005-370142 XP002470012 & KR 2005 004 757 A (GOLDEN FARM CO LTD) 12. Januar 2005 (2005-01-12)
- DATABASE WPI Week 200520 Derwent Publications Ltd., London, GB; AN 2005-191547 XP002470013 & KR 2004 092 007 A (CHINJU MUNHWA BROADCASTING CO LTD) 3. November 2004 (2004-11-03)
- DATABASE WPI Week 200462 Derwent Publications Ltd., London, GB; AN 2004-639368 XP002470014 & KR 2004 039 159 A (PMD CO LTD) 10. Mai 2004 (2004-05-10)
- DATABASE WPI Week 200349 Derwent Publications Ltd., London, GB; AN 2003-516764 XP002470015 & JP 2003 061621 A (SHINBO Y) 4. März 2003 (2003-03-04)
- DATABASE WPI Week 200218 Derwent Publications Ltd., London, GB; AN 2002-134487 XP002470016 & JP 2001 299293 A (USA PANKO YG) 30. Oktober 2001 (2001-10-30)
- DATABASE WPI Week 199614 Derwent Publications Ltd., London, GB; AN 1996-137653 XP002470017 & KR 940 005 631 B1 (HAI TAI CONFECTIONERY CO LTD) 22. Juni 1994 (1994-06-22)
- DATABASE WPI Week 199444 Derwent Publications Ltd., London, GB; AN 1994-351073 XP002470018 & ES 2 058 028 A1 (ALIMENTARIA ADIN SA) 16. Oktober 1994 (1994-10-16)

## Beschreibung

Die vorliegende Erfindung bezieht sich auf ein Verfahren zur Herstellung von fettreduzierten frittierten Nahrungsmitteln, die für den menschlichen und tierischen Verzehr geeignet sind, insbesondere von frittierten Snack-Pellets, d.h. nudelähnlichen Nahrungsmitteln bzw. Nahrungsmittelprodukten, die aus einem Teig hergestellt werden, der ausgewalzt oder extrudiert, ggf. getrocknet und anschließend frittiert wird. Dieser Teig kann u.a. aus Kartoffeltrockenprodukten, Getreide, Getreideprodukten mit z.B. Zusätzen von: Gewürzen, Kräutern, Gemüsen, Soja, Fisch und/oder Fleisch hergestellt worden sein. Als Getreide oder Stärkequelle wird üblicherweise Mais, Reis, Weizen oder Cassava verwendet. Durch das erfindungsgemäße Verfahren kann ein fettreduziertes frittiertes Nahrungsmittel, ein frittiertes Nahrungsmittel, bevorzugt ein frittiertes Snack-Pellet mit poröser Teigstruktur hergestellt werden.

### Stand der Technik

Verfahren zur Herstellung von frittierten Snack-Pelletprodukten mit verringertem Fettgehalt wurden in der Vergangenheit sowohl durch wirtschaftliche Faktoren behindert als auch durch Probleme in der Verarbeitung, welche in Produkten mit unzureichendem Geschmack, hohen Bruchraten, zusätzlicher Acrylamidbildung oder zu geringen Fettreduzierungen resultierten.

Es gibt zwar sehr gut funktionierende Fettreduzierungsverfahren für Kartoffelchips mittels Dampfabblasung des Fettes nach dem Frittieren. Diese sind jedoch nicht in gleich hoher Qualität auf Snack-Pellets übertragbar, da die Fettreduzierung zu gering ist, oder/und eine starke Acrylamidbildung verursacht wird und unangenehme brandige Geschmackskomponenten gebildet werden.

CA 957896 beschreibt ein Verfahren zum Reduzieren des Fettgehalts von Kartoffelchips, wobei frittierte Kartoffelchips 3 bis 4 Minuten lang in einer Zentrifuge 158°C heißem Dampf ausgesetzt werden. Hierbei ist ein sehr hohes Zentrifugalfeld von mindestens 352 g notwendig. Wird der heiße Dampf durch heiße Luft ersetzt, so müssen die Kartoffelchips 10 Minuten lang zentrifugiert werden. Hierbei zerbrechen 50 bis 60 % der Kartoffelchips. Zudem nehmen sie einen verbrannten Geschmack an, was auf die Bildung von schädlichem Acrylamid hinweist. Um in diesem Verfahren verwendet werden zu können, muss eine Zentrifuge mit Zuleitungen für den Dampf versehen werden. Zudem kann das Verfahren nur diskontinuierlich durchgeführt werden.

EP 1 283 680 B1 beschreibt ein Verfahren zum Frittieren von Nahrungsmitteln, wobei Fett aus diesen Nahrungsmitteln entfernt wird, indem sie nach dem Frittieren unter vermindertem Druck bis zu 1 Minute lang zentrifugiert werden. Hierzu muss die Zentrifuge mit einer Vakuumpumpe verbunden sein Auch hier ist kein kontinuierlicher Betrieb möglich. Es wird daher vorgeschlagen zwei Zentrifugen parallel zu betreiben, so dass stets eine Zentrifuge befüllt wird und die andere sich in Betrieb befindet. Dies erlaubt zumindest einen batchkontinuierlichen Betrieb.

CN 1 568 756 A (als Derwent Abstract) beschreibt die Herstellung eines frittierten Karottenprodukts, wobei das Verfahren gekennzeichnet ist durch die Schritte: Waschen von Karotten, Schneiden in Scheiben, Erhitzen 5 Minuten in kochendem Wasser oder eine Dampfbehandlung von 8 Minuten, Abkühlen in kaltem Wasser, Trocknen der abgekühlten Karottenscheiben, Frittieren in Öl, Entölen 6 Minuten in einer Zentrifuge und Abpacken unter Stickstoffatmosphäre.

KR 2005 004 757 A (als Derwent Abstract) beschreibt ein Verfahren zur Herstellung von Snack-Produkten, gewürzt mit Früchtepulver, umfassend: in Scheiben schneiden, Frittieren in Öl, Eintauchen in Zuckerlösung und Würzen mit Fruchtpulver. Das überschüssige Öl wird durch Zentrifugation abgetrennt.

KR 2004 092 007 A (als Derwent Abstract) beschreibt ein Verfahren zur Herstellung von frittiertem Seetang mit süßen Fleischstückchen, wobei das Verfahren auch das Abtrennen des Öls mittels Zentrifugation bei 2400 bis 3000 rpm umfasst.

KR 2004 039 159 A (als Derwent Abstract) beschreibt ein Verfahren zur Herstellung von Knoblauchsnacks, umfassend die Schritte: Auswählen von frischem Knoblauch, gefolgt von Waschen und Entziehen der Feuchtigkeit an der Oberfläche des Knoblauchs, Entfernen der Schale des Knoblauchs und Schneiden des Knoblauchs in vier bis fünf Stücke, Blanchieren der Knoblauchstücke und Trocknen auf einen Feuchtigkeitsgehalt von 20%, Eintunken in eine Zuckerlösung, Trocknen in Öl, Entfernen des Öls mittels Zentrifugation und Vakuumverpacken.

JP 2003 061621 A (als Derwent Abstract) beschreibt die Herstellung eines Nahrungsmittelsnackprodukts, enthaltend Muschelschalen, wobei die Muschelschalen gekocht, unter Vakuum frittiert und das Öl mittels einer Zentrifuge entfernt wird.

JP 2001 299293 A (als Derwent Abstract) beschreibt die Herstellung von Eierteigstücken, wobei am Ende des Verfahrens ein Entölungsschritt mittels Zentrifugation durchgeführt wird.

KR 940 005 631 B1 (als Derwent Abstract) beschreibt die Herstellung von Kürbissamensnacks mittels Frittieren der trockenen Kürbissamen, Zentrifugation, Mischen mit Zucker, Beschichten der Oberfläche, Trocknen und Rösten.

ES 2 058 028 A1 (als Derwent Abstract) beschreibt das Abschälen von Johannisbrotbohnen mittels kurzem Frittieren in Öl, Abkühlen in Wasser und Entfernen der Haut durch Abreiben. Das Öl wird in einem Verfahren mittels Zentrifugation entfernt.

Allen Verfahren des Standes der Technik ist gemein, dass sie viel Zeit in Anspruch nehmen (1 bis 4 Minuten) und viel Energie verbrauchen (hohe Zentrifugalfelder, heißer Dampf, Vakuum). Keines dieser Verfahren kann kontinuierlich durchgeführt werden.

Zudem sind die Verfahren nicht für alle gängigen Snackprodukte geeignet. So ist es bisher beispielsweise nicht gelungen, frittierte Snack-Pellets vollkontinuierlich, nachträglich im Fettgehalt zu reduzieren. Bei mittels heißluftexpandierten Snack-Pellets ist die Sensorik deutlich beeinträchtigt, da typische Frittieraromen und -konsistenzen fehlen.

### Detaillierte Beschreibung der Erfindung

Es ist daher Aufgabe der vorliegenden Erfindung, ein Verfahren zur Herstellung von fettreduzierten frittierten Nahrungsmitteln bzw. Nahrungsmittelprodukten bereitzustellen, das produktschonend (bezüglich Beibehaltung der Sensorik und keiner zusätzlichen Acrylamidbildung) schnell und unter geringem Energieverbrauch durchführbar ist. Zudem sollte es möglich sein, das Verfahren kontinuierlich durchzuführen. Schließlich ist es Aufgabe der vorliegenden Erfindung, ein Verfahren zur Herstellung von fettreduzierten frittierten Nahrungsmitteln bzw. Nahrungsmittelprodukten bereitzustellen, dass für Snack-Pellets anwendbar ist. Ein vollkontinuierliches Verfahren zur Herstellung von fettreduzierten frittierten Snack-Pellets ist bisher nicht bekannt.

Diese Aufgabe wird erfindungsgemäß durch ein Verfahren zur Herstellung von fettreduzierten frittierten Nahrungsmitteln bzw. Nahrungsmittelprodukten, ganz besonders bevorzugt von frittierten Snack-Pellets, gelöst, dass die folgenden Verfahrensschritte umfasst:
- Frittieren der Nahrungsmittel bzw. Nahrungsmittelprodukte bzw. Snack-Pellets;
- kontinuierliches Überführen der Nahrungsmittel bzw. Nahrungsmittelprodukte bzw. Snack-Pellets in eine Zentrifuge;
- kontinuierlicher Transport der Nahrungsmittel bzw. Nahrungsmittelprodukte bzw. Snack-Pellets durch den Zentrifugeninnenraum, wobei sie bei Normaldruck zentrifugiert werden und Fett von den Nahrungsmitteln bzw. Nahrungsmittelprodukten bzw. Snack-Pellets mechanisch abgetrennt wird; und
- Austreten der Nahrungsmittel bzw. Nahrungsmittelprodukte bzw. Snack-Pellets aus dem Zentrifugeninnenraum.

Als Normaldruck wird der am Standort der Zentrifuge vorherrschende Atmosphärendruck bezeichnet. Hierbei handelt es sich üblicherweise um einen Druck im Bereich von etwa 1 bar.

Es hat sich überraschenderweise gezeigt, dass die Zentrifugation frittierter Nahrungsmittel bei Normaldruck erfindungsgemäß zu einer Entfettung von mindestens 30 Gew.-% im Vergleich zum unbehandelten frittierten Nahrungsmittel führt (unbehandelte frittierte Kartoffelpellets haben beispielsweise einen Fettgehalt von etwa 28 Gew.-%). Hierbei wird kein Zerbrechen großer Teile des Produktes beobachtet, wie es in der CA 957896 beschrieben wird.

Die frittierten Snack-Pellets sind bevorzugt aus einem Teig herstellbar, der ausgewalzt oder extrudiert, ggf. getrocknet und anschließend frittiert wird. Dieser Teig kann u.a. aus Kartoffeltrockenprodukten, Getreide, Getreideprodukten mit z.B. Zusätzen von: Gewürzen, Kräutern, Gemüsen, Soja, Fisch und/oder Fleisch hergestellt worden sein. Als Getreide oder Stärkequelle wird üblicherweise Mais, Reis, Weizen oder Cassava verwendet.

Bevorzugt weisen die frittierten Nahrungsmittel bzw. Nahrungsmittelprodukte bzw. Snack-Pellets beim Eintritt in den Zentrifugeninnenraum eine Temperatur von über 70°C auf, da sich bei stärkerer Vorheizung die Entfettung steigert.

Es wird vorzugsweise eine Zentrifuge verwendet, die direkt oder durch einen Bypass an die Friteuse angebunden ist. Bevorzugt wird das frittierte Nahrungsmittel bzw. Nahrungsmittelprodukt bzw. Snack-Pellet über eine gebogene Rinne oder ein Transportband von oben in die Zentrifuge eingeführt. Auf diese Weise ist es besonders leicht möglich, eine Übergabezeit zwischen Friteuse und Zentrifuge von maximal 60 s zu erreichen. Diese ist bevorzugt, um ein Abkühlen des Nahrungsmittels bzw. Nahrungsmittelproduktes bzw. Snack-Pellets und eine zeitabhängige Fettadsorption während der Übergabe zu vermeiden.

Als Zentrifuge wird vorzugsweise eine kontinuierlich arbeitende einstufige Filtrationszentrifuge (Schubzentrifuge) verwendet. Schubzentrifugen dienen dem Trennen eines fest-flüssig Gemischs, das kontinuierlich durch ein Füllrohr in den mit Trommeldrehzahl rotierenden Verteiler-Konus befördert wird. Hierbei wird das Aufnahmegut vorbeschleunigt und gelangt durch einen Ringspalt zwischen Schubboden und Verteilerkonus in eine Ringtasse. In der Ringtasse wird das Aufnahmegut schonend auf Winkelgeschwindigkeit beschleunigt und über eine Überlaufkante in Form eines gleichmäßig überströmenden Suspension-Films auf den ganzen Siebumfang der Aufnahmezone verteilt. Der größte Teil der Flüssigkeit wird hier spontan abzentrifugiert und es bildet sich ein Feststoffkuchen. Die Innentrommel führt neben der Rotations- auch eine Oszillationsbewegung aus. Durch diese so genannte Schubbewegung wird der Feststoffkuchen schrittweise von der Innen- zur Außentrommel geschoben und verlässt die Schubzentrifuge schließlich durch ein Feststoff-Fanggehäuse. Solche Schubzentrifugen, deren Aufbau beispielsweise in der EP 0 808 218 B1 beschrieben ist, finden üblicherweise beim Entwässern feuchter Rohchemikalien Verwendung. Das Zielprodukt der Zentrifugation ist meistens die abgetrennte Flüssigkeit.

In einer solchen Zentrifuge fällt das frittierte Nahrungsmittel bzw. Nahrungsmittelprodukt bzw. Snack-Pellet beim Einführen im Zentrifugenzentrum unmittelbar vor den Schubboden. Fett wird durch Zentrifugation abgetrennt. Das Nahrungsmittel bzw. Nahrungsmittelprodukt bzw. Snack-Pellet wird in der Innentrommel auf einem Spaltsiebkorb-Mantel als Kuchen zurückgehalten und durch oszillierende Bewegungen des Schubbodens schrittweise axial in Richtung Feststofffangehäuse transportiert. Die Spalten verlaufen hierbei in Schubrichtung. Das im Zentrifugenraum beschleunigte Nahrungsmittel bzw. Nahrungsmittelprodukt bzw. Snack-Pellet wird schubweise von der rotierenden Innentrommel zur unbewegten konischen Außentrommel geschoben.

Die Zentrifuge weist bevorzugt einen konischen Außentrommelabschnitt auf, der sich in einem unbeweglichen Zylinder fortsetzt welcher zur Abbremsung des Nahrungsmittels bzw. Nahrungsmittelproduktes bzw. Snack-Pellets dient. Der frontseitig verschlossene Zylinder weist hierbei einen unterseitigen Produktauslass auf, so dass die Austrittsbeschleunigung des Nahrungsmittels bzw. Nahrungsmittelproduktes bzw. Snack-Pellets dieses von der konischen Außentrommel zum Produktauslass transportiert. Bevorzugt ist der Zylinder mit einem Gefälle konstruiert, damit es zu keiner Produktstauung kommt.

Die Zentrifuge erzeugt bevorzugt ein Zentrifugalfeld von 10 bis 200 g, was eine schonendere Zentrifugation erlaubt, als etwa in der CA 957896 beschrieben (dort mindestens 352 g).

Der Innenraum der Zentrifuge wird vorzugsweise beheizt, um die Produktabkühlung zu verzögern. Das Beheizen kann mittels Heißluft erfolgen, wobei die Luftgeschwindigkeit jedoch nicht zum Abblasen des Oberflächenfetts beiträgt.

Die Verweilzeit des frittierten Nahrungsmittels bzw. Nahrungsmittelproduktes bzw. Snack-Pellet im Zentrifugeninnenraum beträgt bevorzugt mindestens 2 Sekunden. Sie kann über den Volumenstrom des Produkteintrags gesteuert werden.

Durch das erfindungsgemäße Verfahren kann ein fettreduziertes frittiertes Nahrungsmittel bzw. Nahrungsmittelprodukt, bevorzugt ein Snack-Pellet mit poröser Teigstruktur hergestellt werden.

Die frittierten Snack-Pellets sind bevorzugt aus einem Teig herstellbar, der ausgewalzt oder extrudiert, ggf. getrocknet und anschließend frittiert wird. Dieser Teig kann u.a. aus Kartoffeltrockenprodukten, Getreide, Getreideprodukten mit z.B. Zusätzen von: Gewürzen, Kräutern, Gemüse, Soja, Fisch und/oder Fleisch hergestellt worden sein. Als Getreide oder Stärkequelle wird üblicherweise Mais, Reis, Weizen oder Cassava verwendet.

### Beispiele

Eine kontinuierlich arbeitende einstufige Filtrationszentrifuge, welche einen konischen Außentrommelabschnitt aufweist, der sich in einem unbeweglichen Zylinder fortsetzt, der frontseitig verschlossen ist und einen unterseitigen Produktauslass aufweist (Modell SHS 351 der Firma Siebtechnik) wurde über eine Bänderkonstruktion mit dem Ausgang einer Friteuse verbunden. Die verwendete Schubzentrifuge verfügt, im Gegensatz zu gängigen Schubzentrifugen, nicht über einen Verteilerkonus, eine Ringtasse und eine Überlaufrinne.

Kartoffel-Pellets wurden gemäß einem Standard-Herstellungsverfahren hergestellt. (Auswalzen eines Teiges, bestehend aus hauptsächlich Kartoffeltrockenprodukten und Stärken und anschließendem Trocknen). und bei etwa 190°C für 10 Sekunden frittiert Hierbei wurde der Volumenstrom wie im Folgenden beschrieben, reduziert. Der Fettgehalt der Kartoffel-Pellets betrug vor dem Frittieren 0,6 Gew.-% und nach dem Frittieren 28 Gew-% (Analytikmethode nach Weibull-Stoldt).

Die frittierten Kartoffel-Pellets wurden kontinuierlich über eine Vibrationsrinne in die Zentrifuge überführt, kontinuierlich durch den Zentrifugeninnenraum transportiert, wobei sie bei Normaldruck zentrifugiert wurden und Fett von den Nahrungsmitteln abgetrennt wurde und traten schließlich aus dem Zentrifugeninnenraum aus.

Der Zentrifugeninnenraum wurde mit einer Heißluftpistole beheizt, so dass die Zentrifugentrommel im Betrieb eine Oberflächentemperatur von 100°C aufwies.

Entsprechend des möglichen Einstellungsbereichs des gegebenen Versuchsaufbaus wurden folgende Einflussparameter variiert:
- Leistung am Zentrifugenausgang
- Übergabezeit zwischen Friteuse und Zentrifuge
- Zentrifugalfeld

Die Leistung am Zentrifugenausgang wurde über die Steuerung der Kartoffel-Pelletzufuhr in die Friteuse eingestellt.

Die Übergabezeit wurde über verschiedene Geschwindigkeiten des Übergabebandes zwischen Friteuse und Zentrifuge realisiert.

Das Zentrifugalfeld wurde über einen Frequenzumrichter der Zentrifuge eingestellt.

Der Fettgehalt des fettreduzierten Produkts wurde mittels der Analytikmethode nach Weibull-Stoldt ermittelt.

Der Bruch wurde manuell aussortiert und in Gewichtsprozenten berechnet.

| **Leistung Zentrifugenausgang** | **Übergabezeit von Friteuse bis Zentrifuge** | **Zentrifugalfeld** | **Fett-Gehalt nach Zentrifugation** | **Bruch** |
|---|---|---|---|---|
| [kg/h] | [s] | [g] | [Gew.-%] | [Gew.-%] |
| 345 | 16,5 | 65 | 18,57 | 3,5 |
| 299 | 12 | 28 | 16,23 | 4 |
| 299 | 12 | 111 | 16,51 | 4,2 |
| 231 | 10 | 65 | 14,43 | 2,2 |
| 231 | 16,5 | 65 | 17,32 | 2 |
| 231 | 16,5 | 151 | 16,76 | 15,5 |
| 231 | 24 | 65 | 17,02 | 2,3 |
| 162 | 12 | 28 | 19,16 | 0 |
| 162 | 12 | 111 | 18,99 | 11,1 |

| | | | | |
|---|---|---|---|---|
| s: Sekunden | | | | |

## Patentansprüche

1. Verfahren zur Herstellung von fettreduzierten frittierten Nahrungsmitteln bzw. Nahrungsmittelprodukten, insbesondere von frittierten Snack-Pellets, umfassend die Verfahrensschritte:
- Frittieren der Nahrungsmittel bzw. Nahrungsmittelprodukte bzw. Snack-Pellets;
- kontinuierliches Überführen der Nahrungsmittel bzw. Nahrungsmittelprodukte bzw. Snack-Pellets in eine Zentrifuge;
- kontinuierlicher Transport der Nahrungsmittel bzw. Nahrungsmittelprodukte bzw. Snack-Pellets durch den Zentrifugeninnenraum, wobei sie bei Normaldruck zentrifugiert werden und Fett von den Nahrungsmitteln bzw. Nahrungsmittelprodukten bzw. Snack-Pellets mechanisch abgetrennt wird; und
- Austreten der Nahrungsmittel bzw. Nahrungsmittelprodukte bzw. Snack-Pellets aus dem Zentrifugeninnenraum.

2. Verfahren nach Anspruch 1, **dadurch gekennzeichnet, dass** die frittierten Snack-Pellets aus einem Teig hergestellt sind, der ausgewalzt oder extrudiert, ggf. getrocknet und anschließend frittiert wird, wobei der Teig aus Kartoffeltrockenprodukten, Getreide, Getreideprodukten mit Zusätzen von Gewürzen, Kräutern, Gemüse, Soja, Fisch und/oder Fleisch hergestellt worden ist.

3. Verfahren nach Anspruch 2, **dadurch gekennzeichnet, dass** als Getreide Mais, Reis, Weizen oder Cassava verwendet wird.

4. Verfahren nach einem der Ansprüche 1 bis 3, **dadurch gekennzeichnet, dass** die frittierten Nahrungsmittel bzw. Nahrungsmittelprodukte bzw. Snack-Pellets beim Eintritt in den Zentrifugeninnenraum eine Temperatur von über 70°C aufweisen.

5. Verfahren nach einem der Ansprüche 1 bis 4, **dadurch gekennzeichnet, dass** eine Zentrifuge verwendet wird, die direkt oder durch einen Bypass an die Friteuse angebunden ist.

6. Verfahren nach einem der Ansprüche 1 bis 5, **dadurch gekennzeichnet, dass** das frittierte Nahrungsmittel bzw. Nahrungsmittelprodukt bzw. Snack-Pellet optimalerweise über eine Rinne oder ein Transportband in die Zentrifuge eingeführt wird.

7. Verfahren nach einem der Ansprüche 1 bis 6, **dadurch gekennzeichnet, dass** die Übergabezeit zwischen Friteuse und Zentrifuge maximal 60 Sekunden beträgt.

8. Verfahren nach einem der Ansprüche 1 bis 7, **dadurch gekennzeichnet, dass** als Zentrifuge eine kontinuierlich arbeitende einstufige Filtrationszentrifuge verwendet wird, welche bevorzugt einen konischen Außentrommelabschnitt aufweist, der sich in einem unbeweglichen Zylinder fortsetzt, der frontseitig verschlossen ist und einen unterseitigen Produktauslass aufweist, wobei der Zylinder bevorzugt ein Gefälle aufweist.

9. Verfahren nach einem der Ansprüche 1 bis 8, **dadurch gekennzeichnet, dass** die Zentrifuge ein Zentrifugalfeld von 10 bis 200 g erzeugt.

10. Verfahren nach einem der Ansprüche 1 bis 9, **dadurch gekennzeichnet, dass** der Innenraum der Zentrifuge beheizt werden kann.

11. Verfahren nach einem der Ansprüche 1 bis 10, **dadurch gekennzeichnet, dass** die Verweilzeit des frittierten Nahrungsmittels bzw. Nahrungsmittelproduktes bzw. Snack-Pellets im Zentrifugeninnenraum mindestens 2 Sekunden beträgt.

## Claims

1. Method for producing fat-reduced fried foodstuffs, respectively foodstuff products, in particular fried snack pellets, comprising the method steps:
- frying the foodstuffs, respectively foodstuff products, respectively snack pellets;
- continued transfer of the foodstuffs, respectively foodstuff products, respectively snack pellets into a centrifuge;
- continued transport of the foodstuffs, respectively foodstuff products, respectively snack pellets through the interior space of the centrifuge, wherein they are centrifuged at normal pressure and fat is mechanically separated from the foodstuffs, respectively foodstuff products, respectively snack pellets; and
- leaving of the foodstuffs, respectively foodstuff products, respectively snack pellets from the interior space of the centrifuge.

2. Method according to claim 1, **characterized in that** the fried snack pellets are produced from a dough which is rolled out or extruded, optionally dried and subsequently fried, wherein the dough has been produced from dried potato products, cereals, cereal products having additions of spices, herbs, vegetables, soy, fish and/or meat.

3. Method according to claim 2, **characterized in that** as cereals use is made of maize, rice, wheat or cassava.

4. Method according to any one of claims 1 to 3, **characterized in that** when entering the interior space of the centrifuge the fried foodstuffs, respectively foodstuff products, respectively snack pellets have a temperature of more than 70 °C.

5. Method according to any one of claims 1 to 4, **characterized in that** use is made of a centrifuge being connected directly or via a by-pass to the fryer.

6. Method according to any one of claims 1 to 5, **characterized in that** the fried foodstuff, respectively foodstuff product, respectively snack pellet is optimally fed into the centrifuge by a channel or a conveying belt.

7. Method according to any one of claims 1 to 6, **characterized in that** the time of delivery between fryer and centrifuge is 60 seconds at maximum.

8. Method according to any one of claims 1 to 7, **characterized in that** as centrifuge use is made of a continuously operating single-stage filtration centrifuge, which preferably has a conical outer drum section which is continued in a stationary cylinder being closed at the front and having a product outlet on the bottom side, wherein the cylinder preferably has a gradient.

9. Method according to any one of claims 1 to 8, **characterized in that** the centrifuge generates a centrifugal field of from 10 to 200 g.

10. Method according to any one of claims 1 to 9, **characterized in that** the interior space of the centrifuge can be heated.

11. Method according to any one of claims 1 to 10, **characterized in that** the retention time of the fried foodstuff, respectively foodstuff product, respectively snack pellet in the interior space of the centrifuge is at least 2 seconds.

## Revendications

1. Procédé pour la fabrication de denrées ou produits alimentaires frits à faible teneur en lipides, en particulier des boulettes à grignoter frites comprenant les phases de procédé suivantes:
- la friture des denrées ou produits alimentaires ou boulettes à grignoter
- le passage continu des denrées ou produits alimentaires ou boulettes à grignoter dans une centrifugeuse,
- le transport continu des denrées ou produits alimentaires ou boulettes à grignoter à travers le compartiment intérieur d'une centrifugeuse dans lequel ils sont centrifugés à une pression normale et les graisses sont mécaniquement séparées des denrées ou produits alimentaires ou boulettes à grignoter, et
- l'extraction des denrées ou produits alimentaires ou boulettes à grignoter du compartiment intérieur de la centrifugeuse.

2. Procédé selon la revendication 1, **caractérisé en ce que** les boulettes à grignoter frites sont fabriquées à partir d'une pâte qui est laminée ou extrudée, le cas échéant séchée et ensuite frite, la pâte ayant été élaborée à partir de produits séchés à base de pomme de terre, à partir de céréales, de produits céréaliers avec des additifs comme les épices, les fines herbes, les légumes, le soja, le poisson et/ou la viande.

3. Procédé selon la revendication 2, **caractérisé en ce qu'**on utilise comme céréales, du maïs, du riz, du froment ou du manioc.

4. Procédé selon une des revendications 1 à 3, **caractérisé en ce que** les denrées ou produits alimentaires ou boulettes à grignoter frits pésentent une température supérieure à 70° C à l'entrée dans le compartiment intérieur de la centrifugeuse.

5. Procédé selon une des revendications 1 à 4, **caractérisé en ce qu'**on utilise une centrifugeuse qui est raccordée à la friteuse directement ou par un système dérivé.

6. Procédé selon une des revendications 1 à 5, **caractérisé en ce que** les denrées ou produits alimentaires ou boulettes à grignoter frits sont introduits dans la centrifugeuse par un conduit ou une bande transporteuse.

7. Procédé selon une des revendications 1 à 6, **caractérisé en ce que** le temps de transfert entre la friteuse et la centrifugeuse est au maximum de 60 secondes.

8. Procédé selon une des revendications 1 à 7, **caractérisé en ce qu'**on utilise, comme centrifugeuse, une centrifugeuse à filtration monoétagée fonctionnant en continu qui présente de préférence une section de tambour extérieur conique se prolongeant dans un cylindre fixe qui est fermé à l'avant et présente une sortie de produit en dessous, le cylindre présentant de préférence une déclivité.

9. Procédé selon une des revendications 1 à 8, **caractérisé en ce que** la centrifugeuse génère une plage de centrifugation de 10 à 200 g.

10. Procédé selon une des revendications 1 à 9, **caractérisé en ce que** le compartiment intérieur de la centrifugeuse peut être chauffé.

11. Procédé selon une des revendications 1 à 10, **caractérisé en ce que** la durée de séjour des denrées ou produits alimentaires ou boulettes à grignoter frits dans le compartiment intérieur de la centrifugeuse est au moins de 2 secondes.
